# EUROPÄISCHE PATENTSCHRIFT

(11) **EP 0 572 689 B1**
(45) Veröffentlichungstag und Bekanntmachung des Hinweises auf die Patenterteilung: **06.12.1995**
(21) Anmeldenummer: 92109149.2
(22) Anmeldetag: 30.05.1992
(51) Int. Cl.: F16L 51/02

(54) **Rohrleitungsanlage mit Ausbaukupplung**
Pipe assembly with expansion joint
Assemblage de tuyaux avec joint de dilatation

(43) Veröffentlichungstag der Anmeldung: 08.12.1993
(73) Patentinhaber: Boa AG, CH-6023 Rothenburg (CH)
(72) Erfinder: Mantoan, Silvano R., CH-8804 Au (CH)
(74) Vertreter: Blum, Rudolf Emil Ernst

(56) Entgegenhaltungen:
- EP-A- 0 014 614
- FR-A- 721 497
- US-A- 3 492 030

## Beschreibung

Die vorliegende Erfindung betrifft eine Rohrleitungsanlage mit Rohrstücken und Anlagebetriebseinheiten, die jeweils Verbindungsflansche aufweisen, und mit mindestens einer Ausbaukupplung, die einen zwischen Verbindungsflanschen verlaufenden Metallbalg aufweist und zwischen einem Rohrstück und Anlagebetriebseinheiten eingesetzt ist, deren gegeneinander weisende Verbindungsflansche einen festgelegten Abstand voneinander aufweisen. Die Erfindung betrifft weiter ein Verfahren zum Montieren der Ausbaukupplung und eine Ausbaukupplung für eine Rohrleitungsanlage.

In Rohrleitungsanlagen angeordnete Anlagebetriebseinheiten sind beispielsweise Ventile, Absperrschieber, Pumpen, etc., die mit Rohrstücken verbunden sind, wobei die Verbindungen in bekannter Weise Flanschverbindungen sind. Bei solchen Rohrleitungsanlagen sind auch sogenannte Fixpunkte vorhanden, bei denen Rohrstücke oder Anlagebetriebseinheiten ortsfest montiert sind, so dass sie sich z.B. im Falle thermisch bedingter Dehnungen in der Rohrleitungsanlage nicht verschieben.

Beim erstmaligen Montieren von Rohrleitungsanlagen und insbesondere bei einem späteren Ausbauen und wieder Einbauen einzelner Komponenten, z.B. eines Ventils aus Gründen der Wartung, ist ein kleines axiales Verschieben der Flansche, die miteinander verbunden oder voneinander gelöst werden sollen, bekanntlicherweise unerlässlich, und weiter sind oft z.B. aus Gründen der Ungenauigkeit während dem ursprünglichen Bau der Anlage seitlich verschobene Stellungen der Flansche vorhanden.

Eine weitere bekannte Erscheinung beim Betrieb solcher Anlagen sind auch thermisch bedingte Dehnungen insbesondere von Rohrstücken.

Aus den obigen Gründen werden zwischen Rohrleitungsstücken und z.B. auch Anlagebetriebseinheiten sogenannte Ausbaukupplungen eingesetzt, die allgemein einen Metallbalg aufweisen, der bei beiden Enden mit einem Flansch zur Verbindung mit einem Gegenflansch eines jeweiligen Rohrstückes, bzw. einer jeweiligen Anlagebetriebseinheit dicht verbunden ist. Ueblicherweise und wie allgemein bekannt ist, ist innerhalb des Metallbalges ein Innenschutzrohr angeordnet.

Die bekannten Ausbaukupplungen weisen Flansche auf, entlang deren Umfang jeweils ein Profil zur Aufnahme von den Metallbalg überbrückenden Ausbaustangen verläuft, die gleichmässig über dem Umfang des Metallbalges verteilt koaxial zu demselben verlaufen und die zwei Flansche über ihre Profile miteinander verbinden.

Die Ausbaustangen weisen bei mindestens einem Ende ein Aussengewinde auf, auf welchem eine Mutter aufgeschraubt ist. Beim Anziehen dieser Muttern können die Flansche der Ausbaukupplung zueinander verschoben und damit der Metallbalg gegen seine Federkraft zusammengedrückt werden. Beim Lösen dieser Muttern kann sich entsprechend der Metallbalg ausdehnen.

Muss nun z.B. ein Absperrschieber demontiert werden, werden zuerst die Verbindungsbolzen bei einem der Flansche der Ausbaukupplung, beispielsweise demjenigen Flansch, der mit dem Flansch des Absperrschiebers verbunden ist, gelöst. Somit ist die Ausbaukupplung nur noch dem entgegengesetzt angeordneten Rohrleitungsstück verbunden. Danach werden die Muttern der Ausbaustangen angezogen, womit der Metallbalg zusammengedrückt wird. Damit entfernt sich der Flansch des Ausbaukupplung axial vom Flansch des Absperrschiebers, der seinerseits bei seinem anderen Flansch noch mit einem entgegengesetzten Rohrstück verbunden bleibt. Nachdem auch diese zwei Flansche voneinander gelöst worden sind, kann dann der Absperrschieber z.B. mittels eines Kranes herausgehoben werden.

Diese vielen Arbeitsschritte sind zeitaufwendig und mühselig, und weiter verursachen die mit dem Flanschen der Ausbaukupplung verbundenen zusätzlichen Profile mit den Ausbaustangen entsprechend hohe Herstellungskosten.

Ziel der Erfindung ist, die angeführten Nachteile zu beheben.

Die erfindungsgemässe Rohrleitungsanlage, wie sie in den Ansprüchen gekennzeichnet ist, zeichnet sich dadurch aus, dass der Metallbalg, der zwischen einem jeweiligen Rohrstück und einer jeweiligen Anlagebetriebseinheit eingesetzt wird, bei einem seiner Verbindungsflanschen mit einem Verbindungsflansch eines jeweiligen Rohrstückes und beim anderen seiner Verbindungsflanschen mit einem Verbindungsflansch einer jeweiligen Anlagebetriebseinheit verbundenen Ausbaukupplung mindestens im Nichtbetriebszustand einer axial gerichteten Dehnung, bzw. Zugspannung unterworfen ist.

Das Verfahren zum Montieren der Ausbaukupplung zeichnet sich dadurch aus, dass die Ausbaukupplung im entspannten Zustand zwischen den Verbindungsflanschen von Rohrstück und Anlagebetriebseinheit eingesetzt wird und durch das Anziehen der Verbindungsbolzen zum Verbindungsflansch des Rohrstückes und zum Verbindungsflansch der Anlagebetriebseinheit der Metallbalg der Ausbaukupplung in axialer Richtung gespannt wird.

Die Ausbaukupplung zum Einsetzen zwischen und Verbinden mit zwei gegeneinander weisenden Verbindungsflanschen einer Rohrleitungsanlage zeichnet sich dadurch aus, dass die gesamte Länge der einer Metallbalg aufweisenden Ausbaukupplung bei entspanntem Metallbalg kleiner als der Abstand zwischen den Verbindungsflanschen ist.

Die durch die Erfindung erreichten Vorteile sind im wesentlichen darin zu sehen, dass Ausbaustangen zum Zusammenpressen des Wellrohres entfallen und die Ausbaukupplung sich kürzer und einfacher herstellen lässt. Zudem werden die in der Regel immer auftauchenden thermischen Dehnungen zwischen den Fixpunkten einer Anlage von der Ausbaukupplung in einfacher Weise aufgenommen. Beim Aufnehmen dieser Dehnungen wird die Ausbaukupplung entlastet.

Die montierte Ausbaukupplung, d.h. im Metallbalg ist mindestens im Nichtbetriebszustand einer axial gerichteten Dehnung, bzw. Zugspannung unterworfen. Strömt im Betrieb der jeweiligen Anlage ein Medium durch die Rohrleitung, bzw. Ausbaukupplung, die eine Erwärmung derselben nach der Montage, d.h. dem Nichtbetriebszustand verursacht, wird also der Metallbalg entlastet. Bewirkt ein jeweiliges Medium ein Abkühlen der Rohrleitung, bzw. Ausbaukupplung nach der Montage, d.h. dem Nichtbetriebszustand, wird die axial gerichtete Dehnung, bzw. Zugspannung erhöht. (Offensichtlich wird diese Erhöhung durch geeignete Auswahl des Metallbalges, z.B. dessen Länge, technisch zweckdienlich berücksichtigt.) Schliesslich, wenn die Ausbaukupplung im Betrieb von einem Medium durchströmt wird, das im Vergleich mit der bei der Montage, d.h. dem Nichtbetriebszustand vorherrschenden Temperatur keine Temperaturveränderung des Teiles, der die Ausbaukupplung enthaltenden Rohrleitungsabschnittes verursacht, bleibt die ursprüngliche, durch die Montage erzeugte Dehnung, bzw. Zugspannung des Metallbalges unverändert (Aenderungen durch Druckeinflüsse ausgenommen).

Nachfolgend wird der Erfindungsgegenstand anhand der Zeichnungen näher erläutert. Es zeigt:
Fig. 1 eine gemäss dem Stand der Technik ausgebildete Ausbaukupplung im eingebauten Zustand,
Fig. 2 die Ausbaukupplung nach Fig. 1 im zusammengedrückten Zustand,
Fig. 3 eine gemäss der Erfindung ausgebildete Ausbaukupplung im entlasteten Zustand,
Fig. 4 die Ausbaukupplung nach Fig. 3, bei der die Verbindungsbolzen zum Absperrschieber eingesetzt sind, und
Fig. 5 die Ausbaukupplung nach Fig. 3 im montierten Zustand.

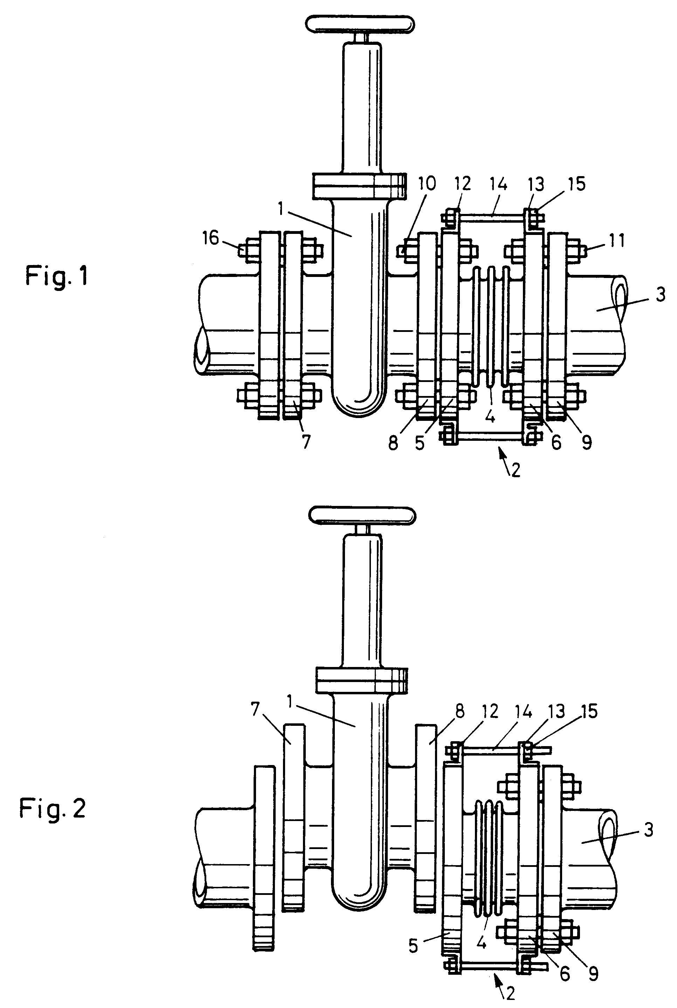

In den Fig. 1 und 2 ist ein Abschnitt einer Rohrleitungsanlage dargestellt, wobei insbesondere als Beispiel einer Anlagebetriebseinheit ein Absperrschieber 1 dargestellt ist, der über eine Ausbaukupplung 2 in einer Ausführung gemäss dem Stand der Technik mit einer Rohrleitungsstück 3 verbunden ist.

Die Ausbaukupplung 2 weist einen Metallbalg 4 auf, der bei beiden Enden mit einem Verbindungsflansch 5 bzw. 6 fest verbunden ist.

Der Absperrschieber 1 ist entsprechend mit Flanschen 7 bzw. 8 ausgerüstet, und vom Rohrleitungsstück 3 ist sein Flansch 9 eingezeichnet.

Die Flansche 5 und 8 der Ausbaukupplung 2, bzw. des Absperrschiebers 1, sind durch Bolzen 10 miteinander verbunden, und die Flansche 6 und 9 der Ausbaukupplung 2, bzw. des Rohrleitungsstücke 3, sind durch Bolzen 11 miteinander verbunden. Die Flansche 5, 6 der Ausbaukupplung 2 sind mit Befestigungsprofilen 12, 13 ausgerüstet, die von verbindenden Ausbaustangen 14, auf deren Aussengewinde Muttern 15 aufgeschraubt sind, durchsetzt sind, welche Ausbaustangen 14 den Metallbalg 4 überbrücken.

In der Fig. 1 sind nun die bis hierher beschriebenen Bauteile im Betriebszustand dargestellt.

Um den Absperrschieber 1 beispielsweise für Wartungszwecke aus der Rohrleitungsanlage entfernen zu können, werden zuerst die die Flansche 5 und 8 miteinander verbindenden Bolzen 10 gelöst. Danach werden die Muttern 15 der Ausbaustangen 14 angezogen, womit der Metallbalg 4 zusammengepresst wird, so dass sich der Flansch 5 der Ausbaukupplung 2 vom Flansch 8 des Absperrschiebers 1 entfernt. Durch ein Lösen der Bolzen 16 wird der Absperrschieber 1 bei seiner entgegengesetzten Seite von der Rohrleitungsanlage abgetrennt und kann nun z.B. mittels eines Kranes herausgehoben werden.

Beim Einbauen des Absperrschiebers 1 wird umgekehrt vorgegangen, wobei zu bemerken ist, dass die Ausbaukupplung 2 bei ausgebautem, oder bei einer Erstmontage möglicherweise in einem entspannten Zustand des Metallbalges 4 vorliegt, so dass vorerst der Metallbalg 4 durch ein Anziehen der Muttern 15 zusammengepresst werden muss, um den nötigen Spielraum zum Einsetzen des Absperrschiebers 1 zu schaffen.

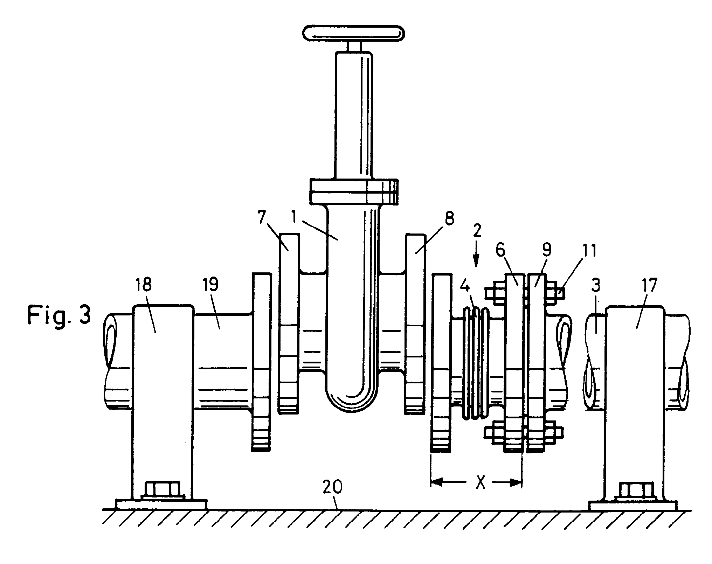

Die erfindungsgemässe Ausführung wird nachfolgend anhand der Figuren 3-5 beschrieben. In diesen Figuren ist noch zusätzlich dargestellt, dass Fixpunkte 17 und 18 der Rohrleitungsanlage vorhanden sind, wobei z.B. der rechts liegende Fixpunkt eine beträchtliche Distanz, beispielsweise mehrere Meter von der Ausbaukupplung entfernt sein kann. Offensichtlich kann auch der links liegende Fixpunkt von der Ausbaukupplung entfernt liegen. Der Vorgang wird nun in der Folge einer Montage des Absperrschiebers 1 beschrieben.

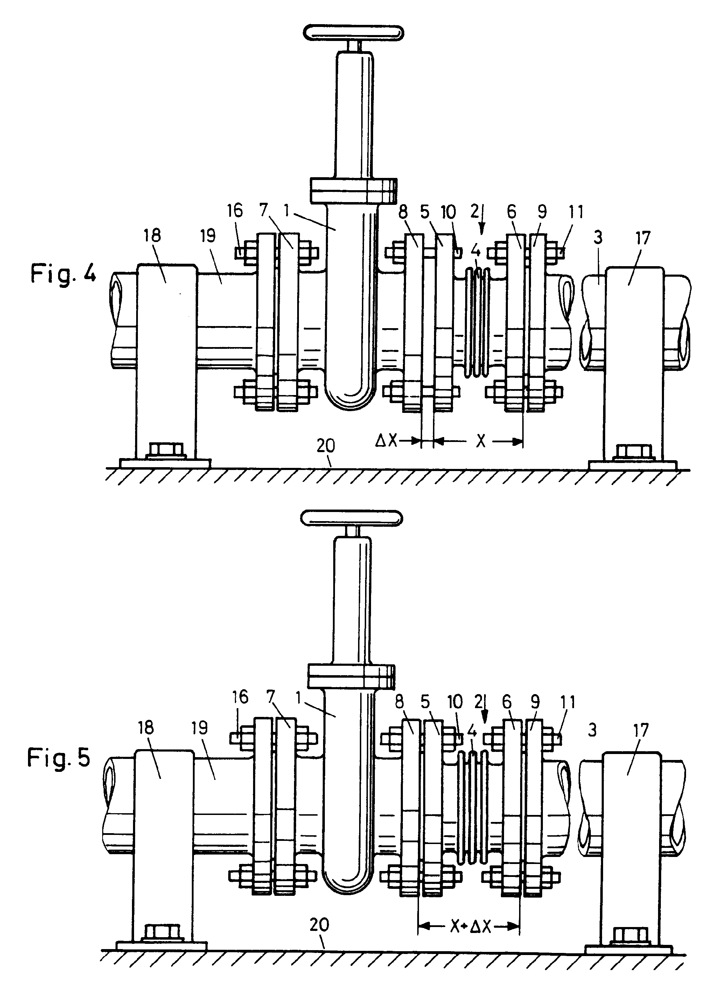

Der Metallbalg 4 der Ausbaukupplung 2, die gemäss der Ausgangslage nach Fig. 3 bereits über die Bolzen 11 mit dem Rohrleitungsstück 3 verbunden ist, befindet sich im vollständig entspannten Zustand. Dabei ist entscheidend zu bemerken, dass die gesamte Länge x der sich im entspannten Zustand befindlichen Ausbaukupplung 2 kleiner als der Abstand zwischen dem Flansch 9 des Rohrleitungsstückes und dem Flansch 8 des Absperrschiebers 1 ist. Der Absperrschieber 1 kann somit ohne irgendwelche Montagevorbereitungsarbeiten, insbesondere in bezug auf die Ausbaukupplung 2, eingesetzt und beim Flansch 7 über die Bolzen 16 mit dem dortigen Rohrleitungsstück 19 werden. Danach werden die Bolzen 10 zwischen die Flansche 5 und 8 eingesetzt, welche Flansche nun nach Fig. 4, den Abstand Δx aufweisen. Die Bolzen 10 werden darauf zum festen Verbinden der Flansche 5 und 8 angezogen und gleichzeitig wird damit der Metallbalg 4, also die gesamte Ausbaukupplung 2 auf die Länge x + Δx gemäss Fig. 5 gedehnt.

Der Vergleich des Arbeitsaufwandes für die Montage gemäss Fig. 3-5 mit demjenigen gemäss Fig. 1 und 2 zeigt, dass beim durch die Erfindung ermöglichten Vorgehen lediglich die ohnehin zur festen Verbindung der Flansche anzuziehenden Bolzen angezogen werden müssen, und keine zusätzlichen Aufwendungen auf Grund der Ausbaustangen 14 gemacht werden müssen. Weil die Ausbaukupplung nach Fig. 3 kürzer ist und zudem die Befestigungsprofile 12, 13 wegfallen, ist die Herstellung und die Montage der nach der Erfindung zu brauchenden Ausbaukupplung einfacher. Auch ist zu bemerken, dass im Falle der in der Regel fast immer auftauchenden thermischen Dehnungen zwischen den Fixpunkten die erfindungsgemässe Ausbaukupplung beim Aufnehmen dieser Dehnungen entlastet wird.

## Patentansprüche

1. Rohrleitungsanlage mit Rohrstücken (3) und Anlagebetriebseinheiten (1), die jeweils Verbindungsflansche (7, 8, 9) aufweisen, und mit mindestens einer Ausbaukupplung (2), die einen zwischen Verbindungsflanschen (5, 6) verlaufenden Metallbalg (4) aufweist und jeweils zwischen einem Rohrstück (3) und einer Anlagebetriebseinheit (1) eingesetzt ist, deren gegeneinander weisenden Verbindungsflansche (8, 9) einen festgelegten Abstand (x + Δx) voneinander aufweisen, dadurch gekennzeichnet, dass der Metallbalg (4) der zwischen einem jeweiligen Rohrstück (3) und einer jeweiligen Anlagebetriebseinheit (1) eingesetzten, bei einem seiner Verbindungsflanschen (6) mit einem Verbindungsflansch (9) eines jeweiligen Rohrstückes (3) und beim anderen seiner Verbindungsflanschen (5) mit einem Verbindungsflansch (8) einer jeweiligen Anlagebetriebseinheit (1) verbundenen Ausbaukupplung (2) mindestens im Nichtbetriebszustand der Rohrleitungsanlage einer axial gerichteten Dehnung, bzw. Zugspannung unterworfen ist.

2. Rohrleitungsanlage nach Anspruch 1, dadurch gekennzeichnet, dass die axiale Länge (x) der entspannten Ausbaukupplung (2) derart bemessen ist, dass sie beim entsprechend entspanntem Zustand des Metallbalges (4) und mindestens im Nichtbetriebszustand kleiner als der Abstand (x + Δx) zwischen den jeweils gegeneinander weisenden Verbindungsflansche (8, 9) des jeweiligen Rohrstückes (3) und der jeweiligen Anlagebetriebseinheit (1) ist.

3. Verfahren zum Montieren der Ausbaukupplung (2) in einer Rohrleitungsanlage nach Anspruch 1 zwischen einem Rohrstück (3) und einer Anlagebetriebseinheit (1), deren gegeneinander weisenden Verbindungsflansche (8, 9) einen festgelegten Abstand (x + Δx) aufweisen, dadurch gekennzeichnet, dass die Ausbaukupplung (2) im entspannten Zustand zwischen den Verbindungsflanschen (8, 9) von Rohrstück (3) und Anlagebetriebseinheit (1) eingesetzt und bei einem ihrer Verbindungsflansche (5 oder 6) mittels Verbindungsbolzen (10 oder 11) mit einem der Verbindungsflansche (8 oder 9) der Anlagebetriebseinheit (1) oder des Rohrstückes (3) fest verbunden wird, so dass zwischen dem anderen Verbindungsflansch (6 oder 5) der Ausbaukupplung (2) und dem diesem gegenüberliegenden Verbindungsflansch (9 oder 8) des Rohrstückes (3) bzw. Anlagebetriebseinheit (1) ein Abstand (Δx) vorhanden ist, dass die voneinander einen Abstand aufweisenden Verbindungsflansche (5, 8 oder 6, 9) mittels weiteren Verbindungsbolzen (11 oder 10) miteinander verbunden werden und durch ein Anziehen der weiteren Verbindungsbolzen (11 oder 10) der Metallbalg (4) in axialer Richtung gespannt wird.

## Claims

1. Pipe assembly with pipe sections (3) and plant operation units (1), each having connection flanges (7, 8, 9), and with at least one expansion joint coupling (2) which includes a metal bellows (4) extending between connection flanges (5, 6) and is inserted between a respective pipe section (3) and a plant operation unit (1), of which the facing connecting flanges (8, 9) are at a fixed distance (x +Δx) from each other, characterized in that the metal bellows (4) of the expansion joint coupling (2) which is inserted between a respective pipe section (3) and a respective plant operation unit (1) and is connected at one of its connection flanges (6) to a connection flange (9) of a respective pipe section (3) and at the other of its connection flanges (5) to a connection flange (8) of a respective plant operation unit (1) is subjected at least in the non-operation state of the pipe assembly to an axially directed expansion or tensile stress, respectively.

2. Pipe assembly according to claim 1, characterized in that the axial length (x) of the corresponding expansion joint coupling (2) is dimensioned such, that at a correspondingly relieved state of the metal bellows (4) and at the non-operative state is smaller than (x +Δx) between the respective facing connection flanges (8, 9) of the respective pipe section (3) and the respective plant operation unit (1).

3. Method of mounting the expansion joint coupling (2) in a pipe assembly according to claim 1 between a pipe section (3) and a plant operation unit (1) of which the facing connection flanges (8, 9) display a set distance (x + Δx), characterized in that the expansion joint coupling (2) is inserted in the relaxed state between the connection flanges (8, 9) of pipe section (3) and plant operation unit (1) and is fixedly mounted at one of its connection flanges (5 or 6) by means of connection bolts (10 or 11) to one of the connection flanges (8 or 9) of the plant operation unit (1) or of the pipe section (3), such that a distance (Δx) is present between the other connection flange (6 or 5) of the expansion joint coupling (2) and the opposite thereto located connection flange (9 or 8) of the pipe section (3) and plant operation unit (1), respectively, that the connecting flanges (5, 8 or 6, 9) located at a distance from each other are connected to each other by means of further connecting bolts (11 or 10) and the metal bellows (4) is stretched by a tightening of the further connecting bolts (11 or 10) in axial direction.

## Revendications

1. Tuyauterie avec des tuyaux (3), des unités intermédiaires (1) comportant des flasques d'accouplement (7, 8, 9) et au moins un organe d'accouplement compensateur (2) présentant un accordéon métallique (4) entre des flasques d'accouplement (5, 6) et qui est inséré entre une section de tuyau (3) et une unité intermédiaire (1), les flasques (8, 9) se faisant face de ces deux pièces étant séparées par une distance fixe (x + Δx), caractérisée en ce que qu'au moins lorsque la tuyauterie n'est pas en service l'accordéon métallique (4) de l'organe compensateur (2) installé entre une section de tuyau (3) et une unité intermédiaire (1) et fixé par une de ses flasques (6) à une flasque d'accouplement (9) d'une section de tuyau (3) correspondante et par l'autre (5) de ses flasques à une flasque (8) de l'unité intermédiaire (1) est soumis à une élongation, respectivement à une force de traction axiale.

2. Tuyauterie selon la revendication 1, caractérisée en ce que la longueur axiale (x) de l'organe compensateur (2) à l'état de repos est dimensionnée de manière à ce qu'à l'état de repos correspondant de l'accordéon métallique (4), et au moins lorsque la tuyauterie n'est pas en service, cette longueur est inférieure à la distance (x + Δx) entre les flasques (8, 9) se faisant face de la section de tuyau (3) et de l'unité intermédiaire (1) correspondante.

3. Procédé pour le montage de l'organe compensateur (2) dans une tuyauterie selon la revendication 1 entre une section de tuyau (3) et une unité intermédiaire (1) dont les flasques (8, 9) se faisant face sont séparées par une distance déterminée (x + Δx), caractérisé en ce que l'on insère l'organe compensateur (2) à l'état de repos entre les flasques d'accouplement (8, 9) de la section de tuyau (3) et de l'unité intermédiaire (1) et que l'on l'attache fixement par une de ses flasques (5 ou 6) et au moyen de boulons (10 ou 11) à une flasque (8 ou 9) d'accouplement de l'unité intermédiaire (1) ou de la section de tuyau (3), de façon à ce qu'une distance (Δx) existe entre l'autre flasque d'accouplement (6 ou 5) de l'organe compensateur (2) et la flasque d'accouplement (9 ou 8) de la section de tuyau (3), respectivement de l'unité intermédiaire (1) lui faisant face, et en ce que les flasque d'accouplement (5, 8 ou 6, 9) situées à distance l'une de l'autre sont réunies par d'autres boulons (11 ou 10) et l'accordéon métallique (4) soumis à une tension axiale par serrage de ces autres boulons (11 ou 10).
